Europäisches Patentamt

European Patent Office

Office européen des brevets

(19)

(11) EP 0 536 068 B1

(12) FASCICULE DE BREVET EUROPEEN

(45) Date de publication et mention
de la délivrance du brevet:
**08.12.1999 Bulletin 1999/49**

(51) Int Cl.6: **H04B 7/195**, H04B 7/204

(21) Numéro de dépôt: **92420345.8**

(22) Date de dépôt: **01.10.1992**

(54) **Système de communication par satellites en orbite basse à destination de terminaux**

Kommunikationsanordnung für Endgeräten mit Satelliten auf niedrigen Umlaufbahnen

Low orbit satellite communication system with terminals as destination

(84) Etats contractants désignés:
**DE FR GB IT SE**

(30) Priorité: **02.10.1991 FR 9112119**

(43) Date de publication de la demande:
**07.04.1993 Bulletin 1993/14**

(73) Titulaire: **ALCATEL**
**75008 Paris (FR)**

(72) Inventeurs:
 • **Rouffet, Denis**
  **F-92100 Boulogne Billancourt (FR)**
 • **Berthault, Frédéric**
  **F-75015 Paris (FR)**
 • **Mazzella, Michel**
  **F-78100 Saint-Germain-en-Laye (FR)**
 • **Tanguy, Yannick**
  **F-75015 Paris (FR)**

(74) Mandataire: **Smith, Bradford Lee et al**
**COMPAGNIE FINANCIERE ALCATEL**
**Dépt. Propriété Industrielle**
**30, avenue Kléber**
**75116 Paris (FR)**

(56) Documents cités:
EP-A- 0 365 885       EP-A- 0 421 698
WO-A-88/01457        WO-A-88/04866
FR-A- 2 129 898      US-A- 4 292 683

 • NATIONAL TELECOMMUNICATIONS
  CONFERENCE , vol. 1/4, 30 Novembre 1980,
  HOUSTON,US; P.R.HIRSCHLER-MARCHAND ET
  AL 'system design and technology development
  for an EHF beam-hopped satellite downlink'
 • NATIONAL TELECOMMUNICATIONS
  CONFERENCE , vol. 1/4, 30 Novembre 1980,
  HOUSTON,US; P.R.HIRSCHLER-MARCHAND ET
  AL 'system design and technology development
  for an EHF beam-hopped satellite downlink'
 • IEEE CONFERENCE ON SATELLITES SYSTEMS
  PER MOBILE COMMUNICATIONS AND
  SURVEILLANCE vol. 95, 1973, pages 35 - 38 J.G
  WALKER 'CONTINUOUS WHOLE EARTH
  COVERAGE BY CIRCULAR ORBIT SATELLITES'

## Description

L'invention concerne un système de communications par satellites en orbite basse à destination de terminaux mobiles ou non, émetteurs-récepteurs ou récepteurs uniquement.

Les communications par satellites avec des terminaux mobiles étudiées jusqu'à présent utilisaient deux types d'orbites : les orbites des satellites géostationnaires ou des orbites elliptiques fortement inclinées ayant toutes deux la propriété d'être situées, en moyenne, au dessus de zones dans l'espace à forte concentration de particules, appelées "ceintures de Van Allen". Depuis peu des orbites plus basses ont été considérées. Leur altitude se situe entre 800 et 2000 Km. Une des caractéristiques des systèmes de communications par satellites qui utilisent de telles orbites est la possibilité de communiquer avec un nombre important de terminaux mobiles, par exemple du type portatif. Mais les faibles performances radio-électriques de ces terminaux obligent à prévoir une compensation obtenue avec des performances radio-électriques supérieures du satellite. La différence entre les orbites d'altitude supérieure aux "ceintures de Van Allen" et celles d'altitude inférieure réside dans une atténuation d'espace d'autant plus faible que le satellite est proche de la terre.

Pour ces communications, suivant les bandes de fréquences disponibles, deux architectures de transmission sont possibles. La première utilise la bande L uniquement pour les liaisons mobile-satellite, l'autre les bandes L et S. Par ailleurs, ces architectures peuvent varier suivant les pays, puisque plusieurs normes de transmission peuvent être employées : par exemple utilisation de techniques d'accès AMRT, utilisation de techniques de type AMRC....

Le système de communications de l'invention est compatible des normes GSM ("groupe spécial mobiles"). Il est également adaptable aux techniques de transmission AMRC. Ce système n'utilise qu'une bande de fréquences pour les liaisons terminal-satellite.

L'invention a donc pour objet de proposer une séquence de transmission particulière, puisque tant le satellite que le terminal ne peuvent recevoir et émettre en même temps. Cela oblige donc à la mise en place d'une trame émission/réception et à disposer de fonctionnalités de synchronisation spécifiques, en temps pour un système AMRT, et en temps et en code pour un système AMRC.

Un rapport du CCIR (document numéro US IWP 8/14-52 ; 1er Août 1990) intitulé "Technical characteristics of a personnal communication mobile satellite system" décrit un système de communications par satellites à orbite basse avec des antennes multifaisceaux ; chacune comportant 37 faisceaux coniques. Un tel système a le grand inconvénient de présenter un grand nombre de pinceaux qui forment, chacun, une petite trace à terre. De plus, du fait même de la mobilité des utilisateurs et du défilement des satellites, des changements de pinceaux peuvent se produire au cours du temps. Ceux-ci s'accompagnent généralement d'un changement de ressources ("hand-over"). Leur nombre élevé au cours d'une conversation constitue un phénomène préjudiciable à la qualité de la liaison et au confort d'écoute. Un tel système a pour inconvénient de présenter une trame émission-réception longue.

L'objet de la présente invention est de pallier ces inconvénients en décrivant un système de communication qui permette d'améliorer de façon très importante la capacité des satellites, en utilisant une trame émission-réception courte.

Le document IEEE National Telecommunications Conference, Vol. 1/4, 30 novembre 1980, Huston, TX, USA, pp.17.5.1 -17.5.7; P.R. Hirschler-Marchand et al., "System design and technology development for an EHF beam-hopped satellite downlink" décrit différents éléments d'une charge utile de satellite avec une antenne multifaisceaux dont les pinceaux sont allumés, en liaison descendante, selon un balayage spatial ("beam hopping" en anglais) pour permettre une meilleure utilisation des ressources radioélectriques.

La charge utile proposée dans ce document est complexe, car elle comporte des moyens de démodulation, décodage, codage, remodulation, commutation, mémoires volatiles ("buffers" en anglais) multiplexage, reformattage et traitement des signaux, et conversion de fréquences. En outre, elle doit convertir les liaisons montantes multiplexées en AMRF à 44 GHZ, en liaisons descendantes en AMRT avec saut de fréquence et saut de pinceaux à 20 GHZ.

L'objet de l'invention est de pallier ces inconvénients en décrivant un système de communication qui permette, d'une façon simple, une utilisation optimisée du spectre radioélectrique dans une seule bande de fréquences qui serait utilisée pour les liaisons montantes et descendantes.

L'invention propose à cet effet un système de communications par satellites en orbite basse à destination de terminaux selon la revendication 1, ainsi que les divers équipements faisant partie d'un tel système et décrits dans d'autres revendications.

Dans un exemple de réalisation le système antenne de communication de chaque satellite assure une couverture isoflux composée de plusieurs pinceaux qui peuvent, avantageusement, être elliptiques, allongés dans le sens de défilement du satellite.

L'invention va être décrite de façon plus détaillée ci-après, à l'aide de la description et des dessins annexés.

Sur ces dessins :

- la figure 1 représente une couverture dans un système de communications par satellites de l'arc connu ;
- la figure 2 illustre le système de communications par satellites selon l'invention ;

- les figures 3 et 4 illustrent deux types de trames émission-réception relatives au système représenté sur la figure 2 ;
- la figure 5 illustre une réalisation particulière du système de l'invention.

Le système de satellites ou "constellation" considéré est un système à couverture mondiale qui complémente les systèmes communications terrestres existant. Dans ce système, un terminal mobile ou non, émetteur-récepteur ou récepteur uniquement, est identifié, localisé et relié par un satellite de la constellation au travers d'une station de connexion au réseau fixe public lui permettant d'accéder à l'ensemble des services du réseau public téléphonique ou du futur RNIS.

Les ressources radioélectriques allouées à l'ensemble des terminaux sont divisées en cellules satellitaires qui correspondent chacune à une zone de rayon faible par rapport à la couverture satellite et de rayon grand par rapport à une cellule terrestre d'un réseau mobile de type "Groupe Spécial Mobiles" (GSM). Cette cellule est rattachée à une station de connexion et les terminaux appartenant géographiquement à cette zone sont rattachés à cette station.

Dans un tel système de communications par satellites, il y a deux classes d'orbites basses possibles :

- les orbites polaires dont le plan passe par les pôles (ou quasi-polaire pour prendre en compte le cas des orbites héliosynchrones ; c'est-à-dire dont le plan reste fixe dans l'espace). Ces orbites ont, en principe, la propriété de garantir une couverture permanente et globale de la terre ;
- les orbites inclinées dont le plan fait un angle donné, en pratique inférieur à 60°, avec le plan de l'équateur. La couverture permanente est alors composée de deux bandes de frontières parallèles à l'équateur et symétriques par rapport à celui-ci.

Chaque type d'orbite a des points d'intersection avec les plans d'orbite. Dans le cas des orbites polaires, la zone d'intersection de celles-ci est voisine des pôles. Dans le cas des orbites inclinées, cette zone est voisine de l'équateur. Par ailleurs, la zone de service d'un satellite est définie par une condition géométrique : c'est l'ensemble des points de la terre d'où le satellite est vu avec une élévation (angle que fait la direction utilisateur-satellite avec le plan tangent à la terre à l'endroit du terminal) supérieure à une valeur prédéterminée (la valeur pratique est comprise entre 10° et 15°).

Ces deux types d'orbites présentent la même propriété : les zones de service de chaque satellite se recouvrent à des instants ou à des endroits différents :

- dans le cas d'orbites polaires, c'est en allant vers les pôles que les zones de service de chaque satellite se recouvrent peu à peu ;

- dans le cas des orbites inclinées, la description du phénomène de recouvrement est plus complexe, mais dans certaines zones, elle peut atteindre 100%, Il y a même des constellations de satellites qui assurent dans certaines zones une couverture quadruple.

Une telle propriété est avantageuse, car elle permet d'établir des communications avec au moins deux satellites dans la plupart des cas. La conception du système selon l'invention tient compte de ces couvertures multiples pour éviter des brouillages entre couvertures. Le mode d'accès à ces satellites en orbite basse tient également compte de ce problème de brouillage.

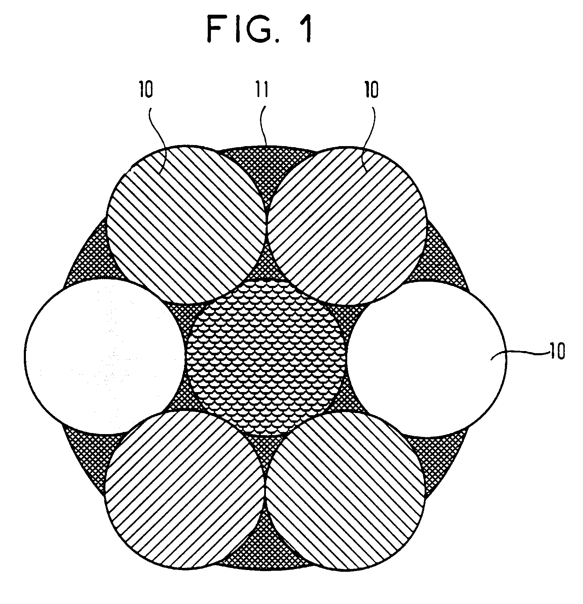

Dans un système de communications par satellites de l'art connu, tel que celui défini précédemment, on réalise à terre une zone de couverture à l'aide de plusieurs pinceaux 10 comme représenté sur la figure 1 ; la couverture utile obtenue étant la zone 11. Une telle couverture présente plusieurs inconvénients : elle présente, dans le trajet satellite vers terminal, plusieurs zones dans lesquelles les puissances de brouillage sont très importantes. Ces zones, tant en AMRT (accès multiple à répartition dans le temps) qu'en AMRC (accès multiple à répartition par codage), sont dimensionnantes, c'est-à-dire qu'elles participent très largement à la taille, au poids et au coût du satellite considéré. Si les orbites sont de plus inclinées, ces brouillages peuvent conduire à des coupures de liaison pendant plusieurs dizaines de secondes. De plus, une telle couverture à l'aide de pinceaux fins nécessite des changements de ressources assez fréquents. Dans un système où le nombre de pinceaux est important, ceci conduit à avoir un changement de ressource par exemple toutes les minutes. La charge de traitement induite au sol est alors loin d'être négligeable.

Par ailleurs, tant en AMRC où l'effet de proximité ("near-far effect") peut être important, qu'en AMRT/AMRF ou en AMRF (accès multiple à répartition en fréquence), où est connu l'effet néfaste des porteuses de fortes amplitudes sur celles qui sont moins puissantes, il est souhaitable de disposer d'un gain d'antenne conduisant au sol à une puissance reçue (par unité de surface) aussi uniforme que possible.

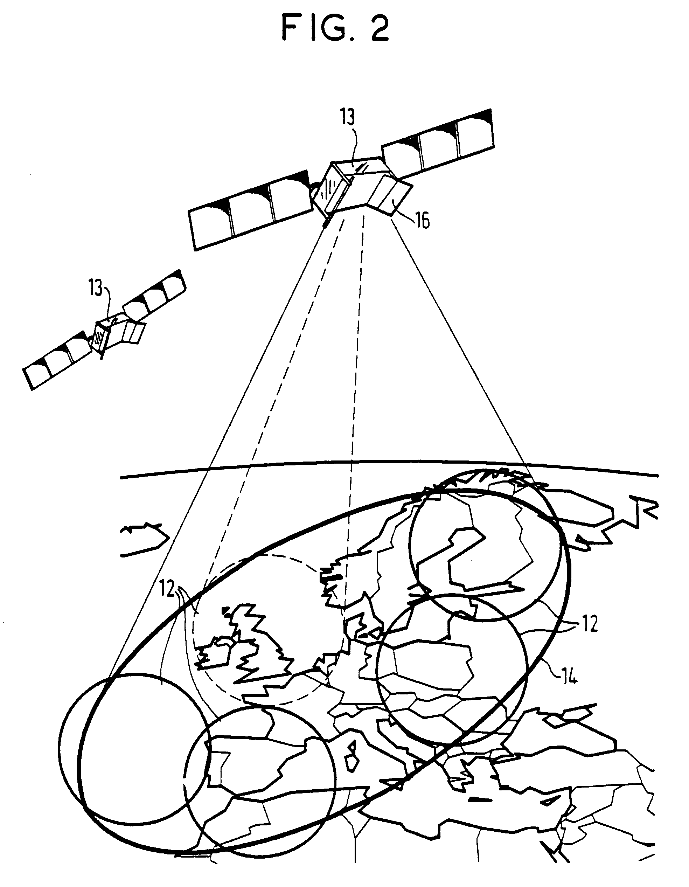

Au même titre que les systèmes terrestres de radiocommunications avec les mobiles, le système à satellites de l'invention, tel que représenté sur la figure 2, est un système cellulaire pour lequel les cellules de plus grande dimension, sont constituées par la trace au sol des différents pinceaux 12 de couverture de chaque satellite 13 multifaisceaux. D'un point de vue radioélectrique, une cellule se caractérise par un ensemble de ressources (fréquences, intervalles de temps, codes), dans lequel le terminal vient puiser un élément lors de l'établissement d'une communication. Le système selon l'invention est un système à N pinceaux 12.

Dans l'exemple, illustré par la figure 2, qui représente la couverture 14 au sol d'un satellite 13 de la contellation, on éclaire successivement un groupe de plusieurs spots 12 choisis parmi les N spots du satellite séquentiellement. Cette opération est réalisée aussi bien en émission qu'en réception, ce qui conduit naturellement à une trame de transmission. D'une manière générale, la couverture se compose d'un ensemble de N spots (qui peuvent être circulaires, elliptiques ou de forme quelconque) éclairés simultanément suivant la loi de "beam-hopping".

Les émissions et les réceptions dans les différents spots s'effectuent conformément au schéma de trames satellites étudiées plus loin.

En effet, dans le cas d'un système multipinceaux, il y a deux moyens de s'affranchir des brouillages entre pinceaux voisins rattachés à un même satellite :

- chacun des pinceaux est éclairé en permanence et la limitation des brouillages entre pinceaux est possible grâce à un schéma de réutilisation de fréquences. Toute la bande disponible n'est pas alors utilisée dans un pinceau.
- toute la bande disponible est utilisée dans un pinceau. La technique qui permet de s'affranchir du brouillage entre pinceaux voisins est le balayage spatial ou "saut de pinceau" (beam-hopping). Sont éclairés simultanément les pinceaux suffisamment éloignés spatialement tels que leurs niveaux d'interfèrences mutuels soient acceptables.

Concernant la limitation du brouillage entre pinceaux de satellites différents, il est à noter que lorsque deux satellites ou plusieurs se croisent ou se rapprochent, leurs traces au sol se recouvrent plus ou moins partiellement. Ces événements se rencontrent relativement fréquemment dans un système multifaisceaux. D'autre part, des brouillages supplémentaires peuvent résulter de phénomènes de propagation transhorizon. Ces brouillages aléatoires ne peuvent, dans ce cas, être limités que par la technique du "beam hopping".

Parmi tous les modes d'accès existant, plusieurs modes forment un compromis judicieux entre les performances (nombre de canaux) et la complexité (donc le coût) du démodulateur. Il s'agit de modes utilisant soit une séparation des signaux par la fréquence (AMRF), soit une séparation par le temps ( AMRT), soit une séparation par le code ( AMRC), soit des modes hybrides : une combinaison AMRC-AMRT par exemple.

Les modes d'accès les plus avantageux sont ceux qui peuvent être compatibles avec les modes utilisés par les réseaux cellulaires terrestre. Ils sont au nombre de trois :

. Le mode d'accès à répartition en fréquence (AMRF) utilise un duplexage en fréquence. Il nécessite quatre bandes de fréquences pour établir une liaison : deux bandes de fréquences pour établir les liaisons entre le terminal et le satellite, deux bandes de fréquences pour établir les liaisons entre le satellite et les stations fixes des réseaux de terre (liaisons de connexion).

On peut atteindre une capacité légèrement inférieure à 40 porteuses par MHz et par pinceau fin (de type GSM demi-débit, ou de signal de parole codée à 4800 bits/seconde).

. Le mode d'accès à répartition dans le temps (AMRT) a ceci de particulier qu'il augmente le débit de façon telle qu'un utilisateur donné n'ait accès au satellite que pendant une durée courte qui lui a été pré-assignée. Dans le système selon l'invention, on utilise plusieurs porteuses par bande de fréquence, de telle façon que le débit ne soit pas trop élevé. Le débit choisi est celui du réseau cellulaire terrestre que le système à satellites complète. Par exemple en Europe, on choisit de préférence le débit du réseau GSM (norme européenne ETSI), aux Etats Unis, celui du réseau DAMPS (norme numérique USA). Dans ce type d'accès, la bande de fréquence utilisée par chaque porteuse étant supérieure à l'effet Doppler, on utilise un "saut de pinceau". Cependant, ce saut de pinceau impose une synchronisation entre l'émission et la réception, tant pour le satellite que pour le terminal. Suivant les bandes de fréquences qui sont disponibles pour le mobile, plusieurs solutions sont possibles :

- Dans le cas classique où deux bandes de fréquences sont disponibles pour les trajets terminal mobile-satellite, il est possible de simplifier la structure du terminal en utilisant une émission et une réception toujours séparées dans le temps (cette technique s'appelle "duplexage temporel" et est notée "TDD"). Le principe de l'accès retenu alors est donc le suivant : pour établir une communication on attribue une ressource fréquentielle (choix d'une fréquence porteuse), puis à l'intérieur de cette ressource on définit des instants d'émission. La synchronisation doit être garantie par le terminal et la station de connexion. Elle s'effectue tout d'abord dans un canal spécifique puis dans le canal de transmission, où le changement d'instant d'émission se fait par incrément.
- Dans le cas d'une seule bande de fréquences pour les liaisons terminal mobile-satellite, le fonctionnement en TDD pour les terminaux mobiles et le satellite est obligatoire. Ce qui conduit à une charge utile du satellite particulièrement simple. La synchronisation de l'émission du terminal mobile se fait en utilisant tout d'abord un canal spécifique puis en utilisant une procédure en boucle fermée, qui incrémente ou décrémente l'instant d'émission. Dans ce cas, comme dans le précédent, une gestion centralisée des ressources en fréquence permet de limiter les brouillages. De plus, il n'est pas exclu que des changements de ressources ("hand-over") rapides aient à être faits. Mais le système de l'invention est appelé à compléter un réseau de qui possède déjà ces fonctionnalités. Cette gestion repose sur le principe suivant : à partir d'une certaine altitude du satellite, les zones géographiques où il y a possibilités de brouillages sont limitées. Dans ces zones seules il y a un partage des ressources spectrales. Dans toutes les autres, un terminal peut avoir accès à la totalité du spectre. Néanmoins, il est possible de trouver un remède aux brouillages sans avoir recours à une gestion complètement centralisée du système en utilisant un saut de fréquence lent ; de telle sorte que, s'il y a brouillage, ce ne soit que pendant un temps court.

La capacité qu'il est alors possible d'atteindre est légèrement inférieure à 35 porteuses par MHz. (Cette capacité semble inférieure à celle mentionnée en AMRF. Mais il faut tenir compte du fait qu'il n'y a qu'une seule bande de fréquences : ce type de système a en fait une capacité pratiquement double). Le principal avantage de ce type de système est qu'il permet d'utiliser une charge utile satellite très simple.

.       Le mode d'accès à répartition par code (AMRC), autrement appelé "étalement de spectre", permet de donner une solution décentralisée aux problèmes de brouillage. L'emploi d'un étalement de spectre permet, en effet, la superposition de plusieurs porteuses, provenant d'un ou de plusieurs satellites. Ce mode peut être utilisé soit avec un accès de type FDD (l'émission et la réception ayant des bandes de fréquence différentes), soit avec un accès de type TDD.

-       Dans le cas de deux bandes de fréquence pour les liaisons terminal mobile-satellite les deux types d'accès FDD ou TDD sont possibles. Une solution de type TDD permet de diminuer le taux de brouillage provenant des couvertures multiples dans le cas des orbites inclinées. En effet, quand il y a superposition de couvertures, il y a localement une dégradation de la capacité, qui peut être compensée par un dispositif de contrôle de puissance. Un tel dispositif est utile essentiellement sur le trajet satellite-terminal. Il permet de garantir à chaque usager une qualité de communication minimale. En effet en situation de couverture multiple, certains usagers sont pénalisés par une puissance de brouillage trop importante. Par contre si ce brouillage n'est pas trop important, il est possible d'augmenter la puissance satellite destinée à ces usagers : L'augmentation de puissance totale résultante est en principe minime. Mais elle a un impact sur la qualité de liaison des autres usagers qui voient alors leur puissance de brouillage augmenter. L'emploi d'un dispositif de contrôle de puissance a donc des limites qu'il ne faut pas dépasser.

-       Comme dans le cas de l'AMRT, il est possible de fonctionner avec une seule bande de fréquences. Dans ce cas, le processus d'accès est de type TDD. Cependant l'étalement de spectre pose quelques problèmes spécifiques. La démodulation de signaux étalés spectralement suppose que le récepteur est capable de retrouver la référence temporelle qui a été utilisée à l'émission. Deux méthodes sont alors utilisables : soit reconstruire la référence de temps à partir des signaux reçus : Mais l'emploi de codes longs, rendus nécessaires par le nombre d'utilisateurs présents simultanément dans le système, fait que cette technique est très complexe d'emploi ; soit conserver en mémoire la référence de temps, puis à partir d'estimation des variations qu'elle peut avoir entre la réception de deux paquets, la reconstituer lors de la réception.

Le principal problème des accès TDD est l'acquisition initiale de la synchronisation d'émission. Cette synchronisation est effectuée tout d'abord en boucle ouverte puis en boucle fermée à l'aide de la station qui contrôle le réseau. Dans un premier temps, un terminal acquiert le canal de signalisation du réseau. Puis, s'il doit transmettre, envoit un premier message dont la réception permet de définir le décalage temporel qu'il convient d'appliquer pour être parfaitement synchronisé. Cette synchronisation en boucle étant faite et le terminal synchronisé, la poursuite et le contrôle de cette synchronisation est obtenue par la mesure de cette synchronisation faite dans la station terrienne assurant l'interface avec les réseaux téléphoniques commutés. Il y a toutefois un cas particulièrement simple de fonctionnement TDD où ce processus n'a pas besoin d'être appliqué, et où la réception seule des signaux par le terminal suffit à fournir des informations de synchronisation, c'est le cas où seul le terminal fonctionne en TDD. Dans ce cas, le terminal a un fonctionnement bi-fréquence, mais à l'alternat. Dès qu'il reçoit un signal en provenance du satellite, il émet. Côté satellite, les différences de distance aidant, il n'est pas possible de recevoir tous les signaux en provenance des terminaux dans un même pinceau simultanément. L'émission satellite est tramée avec saut de pinceau, c'est-à-dire qu'elle se fait alternativement par moitié du nombre des pinceaux, chaque pinceau émettant étant séparé d'un autre par un pinceau n'émettant pas. Au pas de temps suivant, c'est l'inverse. Cependant la réception du satellite ne peut qu'être permanente du fait de la dispersion temporelle provenant de la dispersion des distances. L'accès en code est sensible à la dispersion d'amplitude des différentes porteuses à la même fréquence. Des codes parfaitement orthogonaux (par exemple des codes de Walsh-Hadamard) et parfaitement synchronisés sont utilisés pour que cet effet ne soit pas sensible. Mais la synchronisation n'est jamais parfaite avec des satellites en orbite basse, même si elle peut être très bonne. La forme de la couverture obtenue à l'aide des antennes satellites est donc très importante si l'on souhaite éviter ce qui est connu sous le nom de "near-far problem". En d'autres termes les porteuses de forte amplitude brouillent beaucoup plus que les porteuses de faible amplitude. Dans un système fonctionnant correctement, toutes les porteuses sont donc ramenées à un niveau aussi voisin que possible.

Dans le système de l'invention il y a deux possibilités de synchronisation qui conduisent à deux structures de trames différentes. Mais tout d'abord il convient d'identifier les contraintes.

-   La constellation de satellites retenue garantit une couverture par au moins deux satellites en chaque point de la terre, donc il est nécessaire de contrôler les brouillages entre satellites. Les brouillages les plus gênants étant ceux provenant des satellites à faible élévation, quant un satellite à forte élévation est utilisé ;

-   il est nécessaire, pour établir un bilan de liaison compatible des contraintes provenant de l'emploi de terminaux portatifs, d'avoir une couverture par pinceaux fins. Le nombre minimal est de six couvertures. Donc le brouillage d'un pinceau sur l'autre doit être maîtrisé ce qui conduit, en AMRT, à l'emploi d'un saut de pinceaux. Sur six pinceaux, deux ou trois seront éclairés simultanément, en laissant deux ou un pinceaux d'écart entre les pinceaux actifs radio-électriquement.

Dans le système de l'invention on ne dispose que d'une seule bande de fréquences : il est donc nécessaire de fonctionner à l'alternat. Le fonctionnement à l'alternat doit être possible pour un mobile situé au voisinage du point subsatellite et pour un mobile situé en bord de couverture.

La dernière contrainte permet d'envisager deux structures de trame :

a) soit des émissions E du satellite dans chacun des pinceaux sont temporellement connexes de même que les instants de réception R. Alors la durée de la trame est déterminée par le fonctionnement en duplexage temporel du mobile le plus éloigné du satellite. En supposant que les instants d'émission et de réception dans chaque pinceau sont de même durée, la contrainte s'exprime par l'inégalité suivante :

$$(n-1)\, Te \geqq 2\, Dmax/c$$

$$F = 2\, n\, Te$$

n est le nombre d'instants d'émission,
Te la durée de chacun de ses instants,
Dmax est la distance maximale (à l'élévation minimale),
F la durée de la trame.

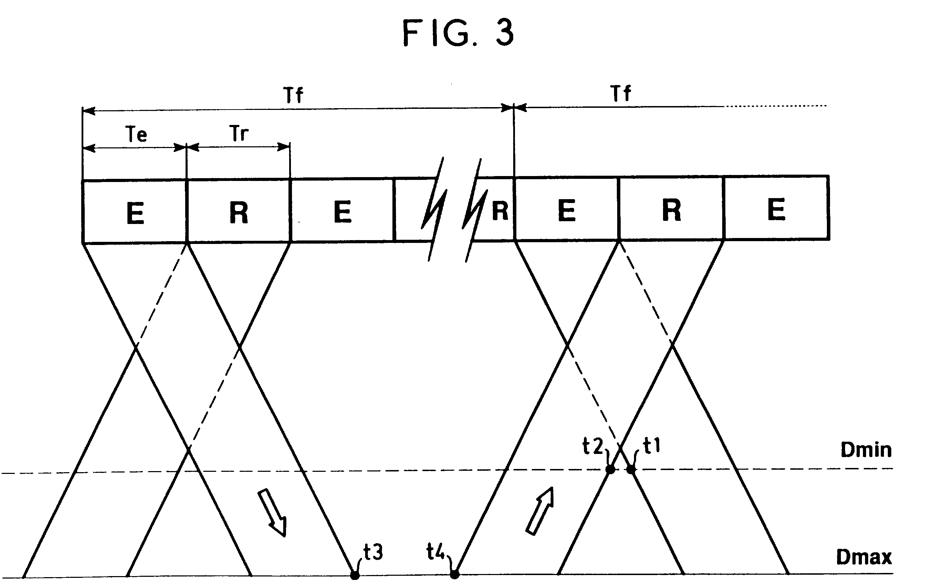

Une telle trame dite "courte" est représentée en figure 3. Elle se compose d'une succession de couples émission-réception, pour former une trame de longueur Tf. Pour une émission donnée la réception correspondante s'effectue une trame après.

Les conditions de non collision des paquets d'émission-réception s'interprètent géométriquement par la disjonction des bandes E/R dessinées en traits pleins dans la gamme d'altitude comprise entre Dmin et Dmax.

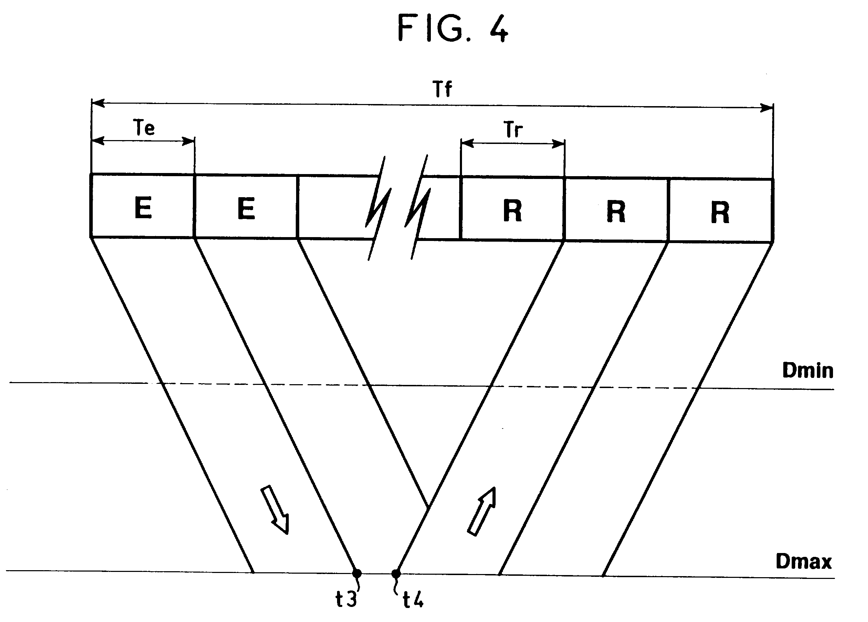

Dans un exemple de réalisation particulièrement avantageux du système de l'invention représenté à la figure 4 on éclaire successivement un groupe de 2 spots choisis parmi 6 spots du satellite. Cette opération est réalisée aussi bien en émission qu'en réception. Dans ce système la forme géométrique des pinceaux 12 a été modifiée : de circulaires ils sont devenus elliptiques allongés. On a ainsi accru sensiblement le temps de communication sans "band-over" ; Le grand axe de l'ellipse étant disposé parallèlement au sens 15 de défilement du satellite. De cette manière, tant que l'utilisateur reste en visibilité du satellite il est éclairé de façon continue par le même pinceau tout au long de la communication. L'adoption d'un nombre restreint de pinceaux elliptiques allongés apporte donc une plus-value certaine au niveau système : la complexité de plusieurs sous-systèmes est réduite (charge utile, antenne) et la gestion de certaines fonctions s'en trouve simplifiée au niveau global (gestion des communications et des ressources). Il s'en suit donc une plus grande souplesse et une plus grande disponibilité du système de communications avec les terminaux mobiles.

Avantageusement le système de l'invention comprend des constellations de satellites qui appartiennent au groupe des constellations connues et répertoriées sous le nom de "constellations symétriques de Walker". (Voir à ce sujet l'article de J. G. Walker intitulé "Continuous whole earth coverage by circular-orbit satellites" paru dans "Satellite systems per mobile communications and surveillance" ; IEEE conference publication 95 ; 1973). Ces constellations sont symétriques tant par la répartition régulière des satellites sur une même orbite que par la distribution des satellites sur une même orbite que par les distribution et l'égale inclinaison des plans orbitaux dans l'espace. Elles ont été choisies parce qu'elles permettent de minimiser le nombre de satellites pour une couverture donnée, et qu'elles sont particulièrement efficaces pour couvrir une bande de latitude.

Une constellation de Walker est caractérisée par cinq paramètres :

- L'altitude, ici 1389 km (pour des raisons de durée de vie).
- L'inclinaison.
- Le triplet de paramètres T/P/F :

    . T est le nombre total de satellites,
    . P est le nombre de plans orbitaux,
    . F est le paramètre de phasage qui indique la position relative des satellites d'un plan orbital au suivant.

Pour optimiser la couverture des zones habitées, c'est-à-dire comprises entre l'équateur et 65° de latitude (Nord ou Sud), il faut une constellation de **Walker (1389 km, 52°, 48/8/1)**. Cette constellation a l'avantage de permettre une couverture optimale de la zone, notamment du point de vue de l'élévation, mais elle a l'inconvénient, comme toutes les constellations à nombre important de satellites de demander au moins deux ans à mettre en place. Le système considéré utilise donc deux constellations, qui peuvent être mises en place consécutivement.

Les constellations retenues, sont les suivantes :

- **Walker (1389 km, 47°, 24/08/3)**, qui couvre correctement le CONUS et le sud de l'Europe (typiquement jusqu'à la latitude de Lille), mais qui présente des trous importants de couverture en-dessous de 30° de latitude.
- **Walker (1389 km, 55°, 24/08/3)**, qui couvre le reste du monde et permet d'optimiser la couverture, notamment l'élévation, dans les pays de latitude comprise entre 10° et 60°.

Ainsi à 10° d'élévation et 1389 km d'altitude ceci conduit à :
(n-1) Te $\geqq$ 23,05 ms soit 5 trames GSM.

si l'on choisit n=2, alors la durée trame minimale est de 4 Te soit F = 92,3 ms.
si l'on choisit n=3, alors la valeur Te qui convient en trame GSM est de 3. Ceci conduit à : F = 83,07 ms.
si l'on choisit n=6, alors la valeur de Te est d'une trame GSM, et F = 55,38 ms.

les périodes sont longues et il faut noter qu'à fur et à mesure que n croît, la capacité de la bande décroît.

b) l'autre possibilité est d'alterner émission et réception sur chacun des groupes de pinceaux fonctionnant simultanément. Le fonctionnement à l'alternat conduit à deux contraintes, l'une provenant des terminaux proches du zénit, l'autre de ceux qui sont en bord de couverture. Les deux inégalités qui régissent ces contraintes sont :

pour les terminaux ayant le satellite au zénit :

$$Te + tr \geqq 2\ Dmin/c$$

pour les terminaux en limite de couverture :

$$m\ (Te + Tr) = F$$

$$F \geqq 2\ Dmax/c\ \text{où} :$$

Te est la durée d'éclairement d'un pinceau émission,
Tr est la durée d'éclairement d'un pinceau réception,
Dmin est la distance minimale (altitude du satellite),
Dmax est la distance entre le satellite et le mobile en bord de zone à l'élévation minimale,
m est le nombre de couple émission-réception composant la trame,
f est la durée de la trame.

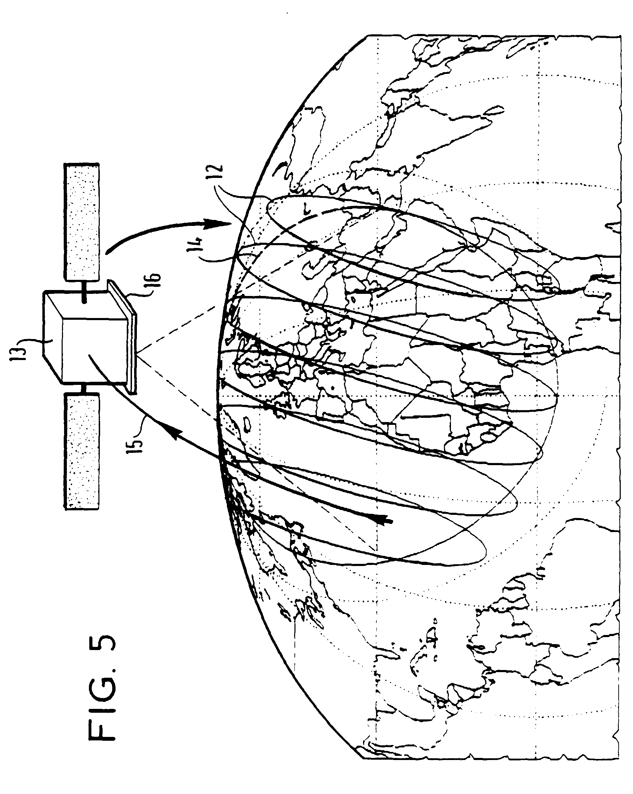

Une telle trame dite "longue" est représentée sur la figure 4. Dans une durée de trame apparaissent toutes les émissions puis les réceptions correspondantes, la condition de non collision s'interprète géométriquement par la disjonction des bandes E/R jusqu'à une distance Dmax.
Dans l'exemple de réalisation représenté à la figure 5 :

- la première contrainte donne, en supposant Te = Tr
Te $\leqq$ 4,63 ms, ce qui permet de prendre :

$$Te = 1\ \text{trame GSM} = 4,615\ \text{ms} ;$$

- la seconde contrainte donne :

à 10° d'élévation F > 23,07 ms ou F > 5,01 trames GSM, d'où m = 3 et F = 27,69 ms
à 20° d'élévation F > 18,39 ms ou F > 3,98 trames GSM d'où m = 2 et F = 18,46 ms.

Dans une réalisation avantageuse basée sur le système représenté sur la figure 5 on a choisi une méthode de synchronisation avec une trame courte, F = 18,46 ms puisqu'une fois la constellation en place dans la plupart des régions du globe, l'élévation dépasse 20°. Durant la phase de démarrage, une durée de trame double peut être choisie de façon à pouvoir fonctionner à élévation nulle. Comme les deux trames peuvent fonctionner simultanément, dans les régions à faible latitude, qui sont également des régions à faible trafic, la durée de trame peut être de 36,92 ms. On distingue alors les terminaux pairs et les terminaux impairs, chacun fonctionnant avec une trame simple d'écart. Ce système à double trame permet de maximiser la capacité des satellites.

Le seul problème qui peut se poser est l'émission d'un terminal d'une parité, à faible élévation, durant la réception d'un terminal de parité opposée situé dans le voisinage de ce dernier; Mais il y a deux remèdes à cette situation dont un calcul de probabilité indique la faible fréquence. Le premier relève de l'attribution des ressources par la même station. En effet, les deux terminaux dépendent en principe de la même-station de connexion, puisqu'ils sont proches l'un de l'autre. L'algorithme d'attribution de ressources peut faire en sorte que les terminaux pairs et impairs n'aient pas accès aux mêmes canaux, ce qui en principe résoud le problème pour la grande majorité des situations opérationnelles. Le second est d'effectuer un "hand-over" dès détection d'un brouillage persistant.

La structure de trame choisie, vue du satellite, comporte donc deux intervalles émission-réception, la durée d'émission étant égale à celle de réception. La durée d'un intervalle émission est égale à celle d'une trame GSM, soit 4,615 ms. La durée de la trame de base est de quatre trames GSM, mais un mode de fonctionnement avec une durée double est possible, pour tenir compte d'un mode de fonctionnement à élévation inférieure à 20°.

La structure de la trame GSM s'impose donc, puisque contrainte par l'altitude des satellites. Il faut cependant noter que l'organisation (disposition temporelle) des trames ne peut pas être conservée telle qu'elle, du moins dans ce mode de fonctionnement à l'alternat. Cependant fonctionnellement il est possible de disposer des mêmes types de canaux, même si la numérotation est modifiée.

Le débit de trame est conservé, de même que la modulation et la durée des paquets. Les canaux de signalisation sont maintenus à l'identique. Donc à un retard additionnel, de quelques millisecondes, près les mêmes procédures peuvent être applicables.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

**Revendications**

1. Système de communications par satellites en orbite basse à destination de terminaux, dans lequel les pinceaux (12) qui assurent la couverture (14) au sol de chaque satellite sont allumés selon un balayage spatial de saut de pinceaux d'antennes dit "beam-hopping", caractérisé en ce que pour chaque satellite du système, tous les terminaux situés dans un même pinceau d'antenne généré par ledit satellite, sont en communication avec ledit satellite pour les liaisons montantes et descendantes dans une seule bande de fréquences, que l'intervalle temporel d'émission et l'intervalle temporel de réception de chaque terminal sont synchronisés l'un par rapport à l'autre et sont séparés dans le temps, que les intervalles temporels correspondant d'émission et de réception pour ledit satellite sont synchronisés l'un par rapport à l'autre et séparées dans le temps, et que pour l'ensemble des terminaux d'un même pinceau d'antenne un duplexage temporel ("TDD") est utilisé pour les liaisons terminaux-satellites.

2. Système de communications selon la revendication 1, caractérisé en ce que le système antenne de communications de chaque satellite assure une couverture isoflux composée de plusieurs pinceaux (12).

3. Système de communications selon la revendication 2, caractérisé en ce que lesdits pinceaux sont des pinceaux elliptiques allongés dans le sens de défilement du satellite (15) correspondant.

4. Système de communications selon l'une des revendications 1 à 3, caractérisé en ce que le mode d'accès audits satellites est un mode AMRT.

5. Système de communications selon l'une des revendications 1 à 3, caractérisé en ce que le mode d'accès audits satellites est un mode AMRC.

6. Système de communications selon la revendication 1, caractérisé en ce que lesdits satellites sont placés sur une orbite polaire.

7. Système de communications selon la revendication 1, caractérisé en ce que lesdits satellites sont placés sur une orbite inclinée.

8. Système de communications selon la revendication 7, caractérisé en ce qu'il utilise deux constellations de satellites de type Walker.

9. Charge utile pour satellite faisant partie d'un système de communications par satellites en orbite basse à destination de terminaux, dans lequel les pinceaux (12) qui assurent la couverture (14) au sol de chaque satellite sont allumés selon un balayage spatial de saut de pinceaux d'antennes dit "beam-hopping", la couverture étant constituée par un ensemble de spots qui sont les tracés au sol des différents pinceaux de couverture de chaque satellite, caractérisée en ce que pour chaque satellite du système, toutes les liaisons montantes et descendantes dans un même pinceau d'antenne sont dans une seule bande de fréquences, que les intervalles temporels d'émission et de réception pour ledit satellite sont synchronisés l'un par rapport à l'autre et séparées dans le temps, et que pour l'ensemble de liaisons satellites-terminaux d'un même pinceau d'antenne un duplexage temporel est utilisé, ladite charge utile comprenant des moyens pour éclairer successivement un groupe de plusieurs spots choisit parmi les N spots dudit satellite, séquentiellement selon la loi de saut de pinceaux d'antennes dit "beam-hopping" ; des moyens d'émission et de réception dans une seule bande de fréquences ; ainsi que des moyens pour synchroniser les émissions et réceptions dans un duplexage temporel pour les liaisons satellites-terminaux.

10. Charge utile selon la revendication 9, caractérisée en ce qu'elle comprend des moyens de réutilisation de fréquences évitant un brouillage entre pinceaux.

11. Charge utile selon la revendication 9, caractérisée en ce qu'elle comprend des moyens d'utilisation de toute la bande disponible dans un pinceau et des moyens de balayage spatial (beam-hopping) avec diversité d'espace.

12. Charge utile selon la revendication 9, caractérisée en ce qu'elle comporte des moyens aptes à fournir des pinceaux allongés dans le sens de défilement du satellite.

13. Terminal faisant partie d'un système de communications par satellites en orbite basse à destination de terminaux, dans lequel les pinceaux (12) qui assurent la couverture (14) au sol de chaque satellite sont allumés selon un balayage spatial de saut de pinceaux d'antennes dit "beam-hopping", caractérisé en ce que tous les terminaux situés dans un même pinceau d'antenne généré par ledit satellite, sont en communication avec ledit satellite pour les liaisons montantes et descendantes dans une seule bande de fréquences, que l'intervalle temporel d'émission et l'intervalle temporel de réception de chaque terminal sont synchronisés l'un par rapport à l'autre et sont séparés dans le temps, et que pour l'ensemble des terminaux d'un même pinceau d'antenne un duplexage temporel ("TDD") est utilisé pour les liaisons terminaux-satellites, ledit terminal comprenant des moyens pour effectuer une synchronisation d'abord en boucle ouverte puis en boucle fermée à l'aide d'une station qui contrôle le réseau, pour synchroniser les émissions et réceptions dans un duplexage temporel pour les liaisons satellites-terminaux.

14. Terminal selon la revendication 13, caractérisé en ce qu'il comprend des moyens d'émission assurant un envoi, avant le début de la transmission proprement dite, d'un premier message, dont la réception par le satellite correspondant permet de définir le décalage temporel qu'il convient d'appliquer pour assurer une parfaite synchronisation entre ledit terminal et ledit satellite.

15. Station terrestre d'interconnexion faisant partie d'un système de communications par satellites en orbite basse à destination de terminaux, dans lequel les pinceaux (12) qui assurent la couverture (14) au sol de chaque satellite sont allumés selon un balayage spatial de saut de pinceaux d'antennes dit "beam-hopping", caractérisé en ce que pour chaque satellite du système, tous les terminaux situés dans un même pinceau d'antenne généré par ledit satellite, sont en communication avec ledit satellite pour les liaisons montantes et descendantes dans une seule bande de fréquences, que l'intervalle temporel d'émission et l'intervalle temporel de réception de chaque terminal sont synchronisés l'un par rapport à l'autre et sont séparés dans le temps, que les intervalles temporels correspondant d'émission et de réception pour ledit satellite sont synchronisés l'un par rapport à l'autre et séparées dans le temps, et que pour l'ensemble des terminaux d'un même pinceau d'antenne un duplexage temporel ("TDD") est utilisé pour les liaisons terminaux-satellites, ladite station d'interconnexion comprenant des moyens de mesure, de poursuite, et de contrôle de la synchronisation des émissions et des transmissions des terminaux et des satellites dudit système dans un duplexage temporel pour les liaisons satellites-terminaux.

## Claims

1. A communications system between low-orbit satellites and terminals, in which the beams (12) that provide the coverage area (14) of each satellite are turned on in accordance with a beam-hopping spatial scanning technique, the system being characterized in that for each of its satellites, all the terminals situated in a same antenna beam generated by said satellite are in communication with said satellite in a single frequency band both for the uplinks and for the downlinks, in that the transmission time interval and the reception time interval of each terminal are synchronized relative to each other and are separated in time, in that the corresponding transmission and reception time intervals for said satellite are synchronized relative to each other and separated in time, and in that for all of the terminals of a same antenna beam, a time-division duplex ("TDD") is utilized for the terminal-satellite links.

2. A communications system according to claim 1, characterized in that the communications antenna system of each satellite ensures uniform flux coverage through a plurality of beams (12).

3. A communications system according to claim 2, characterized in that said beams are elliptical beams elongated in the direction of passage of the corresponding satellite (15).

4. A communications system according to any one of claims 1 to 3, characterized in that the access mode of said satellites is a TDMA mode.

5. A communications system according to any one of claims 1 to 3, characterized in that the access mode of said satellites is a CDMA mode.

6. A communications system according to claim 1, characterized in that said satellites are placed on polar orbits.

7. A communications system according to claim 1, characterized in that said satellites are placed on inclined orbits.

8. A communications system according to claim 7, characterized in that it employs two Walker type satellite constellations.

9. Assignment of resources forming part of a communications system between low-orbit satellites and terminals, in which the beams (12) that provide the ground coverage area (14) of each satellite are turned on in accordance with a beam-hopping spatial scanning technique, the coverage area being formed by a set of spots which are the swaths on the ground of different coverage area beams of each satellite, the assignment of resources being characterized in that for each satellite of the system a single frequency band is used both for the uplinks and for the downlinks in a same antenna beam, in that the transmission and reception time intervals for said satellite are synchronized relative to each other and separated in time, and in that for all the satellite-terminal links of a same antenna beam, a time-division duplex is utilized, said assignment of resources comprising means for illuminating in succession groups of spots selected among the N spots of said satellite, in a sequence according to the beam-hopping law; means for transmitting and receiving in a single frequency band; and means for synchronizing the transmissions and receptions in a time-division duplex for the satellite-terminal links.

10. Assignment of resources according to claim 9, characterized in that it comprises frequency allocation means thereby avoiding interference between beams.

11. Assignment of resources according to claim 9, characterized in that it comprises means for using all of the available band in a beam and means for beam-hopping with space diversity.

12. Assignment of resources according to claim 9, characterized in that it includes means suitable for providing beams that are elongated in the direction of passage of the satellite.

13. A terminal forming part of a communications system between low-orbit satellites and terminals, in which the beams (12) that provide the coverage area (14) of each satellite are turned on in accordance with a beam-hopping spatial scanning technique, the system being characterized in that all the terminals situated in a same antenna beam generated by said satellite are in communication with said satellite in a single frequency band both for the uplinks and for the downlinks, in that the transmission time interval and the reception-time interval of each terminal are synchronized relative to each other and are separated in time, and that for all the terminals of a same antenna beam, a time-division duplex ("TDD") is utilized for the terminal-satellite links, said terminal comprising means for effecting synchronization firstly in open loop and then in closed loop with the aid of a station which controls the network, and for synchronizing the transmissions and receptions in a time-division duplex for the satellite-terminal links.

14. A terminal according to claim 13, characterized in that it includes transmission means ensuring that a "first message" is sent, before the start of transmission, whose reception by the corresponding satellite allows the time delay which is appropriate in order to ensure perfect synchronization between said terminal and said satellite to be defined.

15. An interconnection earth station forming part of a communications system between low-orbit satellites and terminals, in which the beams (12) that provide the coverage area (14) of each satellite are turned on in accordance with a beam-hopping spatial scanning technique, the system being characterized in that for each of its satellites, all the terminals situated in a same antenna beam generated by said satellite are in communication with said satellite in a single frequency band both for the uplinks and for the downlinks, in that the transmission time interval and the reception time interval of each terminal are synchronized relative to each other and are separated in time, in that the corresponding transmission and reception time intervals for said satellite are synchronized relative to each other and separated in time, and in that for all of the terminals of a same antenna beam, a time-division duplex ("TDD") is utilized for the terminal-satellite links, said interconnection station comprising means for measuring, tracking and controlling the synchronization of radiations and transmissions of terminals and satellites of said system in a time-division duplex for the satellite-terminal links.

## Patentansprüche

1. System für die Kommunikation über Satelliten in niedriger Umlaufbahn mit Endgeräten, bei dem die Bündel (12), die die Abdeckung (14) eines jeden Satelliten am Boden gewährleisten, nach einer räumlichen Abtastung mit Antennen-Bündelsprung, als "Beam-hopping" bezeichnet, angeschaltet werden, dadurch gekennzeichnet, dass für jeden Satelliten des Systems alle in einem gleichen von dem Satelliten erzeugten Antennen-Bündel liegenden Endgeräte mit dem Satelliten für Aufwärts- und Abwärtsverbindungen in einem einzigen Frequenzband in Kommunikation stehen, dass das Sendezeitintervall und das Empfangszeitintervall eines jeden Endgeräts miteinander synchronisiert und zeitlich getrennt sind, dass die Zeitintervalle, die dem Senden und dem Empfang für den Satelliten entsprechen, miteinander synchronisiert und zeitlich getrennt sind, und dass für die Gesamtheit der Endgeräte eines gleichen Antennen-Bündels ein Zeitduplex ("TDD") für die Endgeräte-Satelliten-Verbindungen benutzt wird.

2. Kommunikationssystem nach Anspruch 1, dadurch gekennzeichnet, dass das Kommunikationsantennensystem jedes Satelliten eine aus mehreren Bündeln (12) bestehende Isoflux-Abdeckung gewährleistet.

3. Kommunikationssystem nach Anspruch 2, dadurch gekennzeichnet, dass die Bündel in Laufrichtung des entsprechenden Satelliten (15) langgestreckte elliptische Bündel sind.

4. Kommunikationssystem nach einem der Ansprüche 1 bis 3, dadurch gekennzeichnet, dass der Zugriffsmodus auf die Satelliten ein TDMA-Modus ist.

5. Kommunikationssystem nach einem der Ansprüche 1 bis 3, dadurch gekennzeichnet, dass der Zugriffsmodus auf die Satelliten ein CDMA-Modus ist.

6. Kommunikationssystem nach Anspruch 1, dadurch gekennzeichnet, dass die Satelliten auf einer polaren Umlaufbahn stationiert sind.

7. Kommunikationssystem nach Anspruch 1, dadurch gekennzeichnet, dass die Satelliten auf einer geneigten Umlaufbahn stationiert sind.

8. Kommunikationssystem nach Anspruch 7, dadurch gekennzeichnet, dass es zwei Satellitenkonstellationen vom Walker-Typ verwendet.

9. Nutzlast für einen Satelliten, der Teil eines Systems für die Kommunikation über Satelliten in niedriger Umlaufbahn mit Endgeräten ist, bei dem die Bündel (12), die die Abdeckung (14) eines jeden Satelliten am Boden gewährleisten, nach einer räumlichen Abtastung mit Antennen-Bündelsprung, als "Beam-hopping" bezeichnet, angeschaltet werden, wobei die Abdeckung aus einer Anordnung von Punkten besteht, die die Spuren am Boden der verschiedenen Abdeckungsbündel jedes Satelliten sind, dadurch gekennzeichnet, dass für jeden Satelliten des Systems alle Aufwärts- und Abwärtsverbindungen in einem gleichen Antennen-Bündel in einem gleichen Frequenzband liegen, dass die Sende- und Empfangszeitintervalle für den Satelliten miteinander synchronisiert und zeitlich getrennt sind und dass für die Gesamtheit der Satelliten-Endgeräte-Verbindungen eines gleichen Antennen-Bündels ein Zeitduplex verwendet wird, wobei die Nutzlast umfasst:
Mittel, um aufeinanderfolgend eine Gruppe von mehreren Punkten, die aus den N Punkten des Satelliten ausgewählt worden sind, nach der als "Beam-hopping" bezeichneten Regel zum Antennen-Bündelsprung sequentiell anzustrahlen, Mittel zum Senden und zum Empfangen in einem einzigen Frequenzband sowie Mittel zum Synchronisieren von Senden und Empfang in einem Zeitduplex für die Satelliten-Endgeräte-Verbindungen.

10. Nutzlast nach Anspruch 9, dadurch gekennzeichnet, dass sie Mittel zur Frequenz-Wiederverwendung umfasst, die eine Störung zwischen Bündeln vermeiden.

11. Nutzlast nach Anspruch 9, dadurch gekennzeichnet, dass sie Mittel zum Verwenden des gesamten verfügbaren Bandes in einem Bündel und Mittel zum räumlichen Abtasten (Beam-hopping) mit räumlicher Diversität umfasst.

12. Nutzlast nach Anspruch 9, dadurch gekennzeichnet, dass sie Mittel umfasst, die in der Lage sind, in der Laufrichtung des Satelliten langgestreckte Bündel zu liefern.

**13.** Endgerät, das Teil eines Systems für die Kommunikation über Satelliten in niedriger Umlaufbahn mit Endgeräten ist, bei dem die Bündel (12), die die Abdeckung (14) eines jeden Satelliten am Boden gewährleisten, nach einer räumlichen Abtastung mit Antennen-Bündelsprung, als "Beam-hopping" bezeichnet, angeschaltet werden, dadurch gekennzeichnet, dass alle in einem gleichen von dem Satelliten erzeugten Antennen-Bündel liegenden Endgeräte mit dem Satelliten für die Aufwärts- und Abwärtsverbindungen in einem einzigen Frequenzband in Kommunikation stehen, dass das Sendezeitintervall und das Empfangszeitintervall eines jeden Endgeräts miteinander synchronisiert und zeitlich getrennt sind, und dass für die Gesamtheit der Endgeräte eines gleichen Antennen-Bündels ein Zeitduplex ("TDD") für die Endgeräte-Satelliten-Verbindungen benutzt wird, wobei das Endgerät Mittel umfasst, um eine Synchronisation zunächst in offenem, dann in geschlossenem Regelkreis mit Hilfe einer Station durchzuführen, die das Netz steuert, um Senden und Empfang für die Satelliten-Endgeräte-Verbindungen in einem Zeitduplex zu synchronisieren.

**14.** Endgerät nach Anspruch 13, dadurch gekennzeichnet, dass es Sendemittel umfasst, die vor dem Beginn der eigentlichen Übertragung die Absendung einer ersten Meldung gewährleisten, deren Empfang durch den entsprechenden Satelliten es ermöglicht, die Zeitverschiebung zu definieren, die angewendet werden muss, um eine perfekte Synchronisation zwischen dem Endgerät und dem Satelliten zu gewährleisten.

**15.** Terrestrische Verknüpfungsstation, die Teil eines Systems für die Kommunikation über Satelliten in niedriger Umlaufbahn mit Endgeräten ist, bei dem die Bündel (12), die die Abdeckung (14) eines jeden Satelliten am Boden gewährleisten, nach einer räumlichen Abtastung mit Antennen-Bündelsprung, als "Beam-hopping" bezeichnet, angeschaltet werden, dadurch gekennzeichnet, dass für jeden Satelliten des Systems alle in einem gleichen von dem Satelliten erzeugten Antennen-Bündel liegenden Endgeräte mit dem Satelliten für die Aufwärts- und Abwärtsverbindungen in einem einzigen Frequenzband in Kommunikation stehen, dass das Sendezeitintervall und das Empfangszeitintervall eines jeden Endgeräts miteinander synchronisiert und zeitlich getrennt sind, dass die Zeitintervalle, die dem Senden und dem Empfang für den Satelliten entsprechen, miteinander synchronisiert und zeitlich getrennt sind, und dass für die Gesamtheit der Endgeräte eines gleichen Antennen-Bündels ein Zeitduplex ("TDD") für die Endgeräte-Satelliten-Verbindungen benutzt wird, wobei die Verknüpfungsstation Mittel zum Messen, Verfolgen und Steuern der Synchronisation des Sendens und des Empfangs der Endgeräte und der Satelliten des Systems in einem Zeitduplex für die Satelliten-Endgeräte-Verbindungen umfasst.

# FIG. 1

# FIG. 2

# FIG. 3

EP 0 536 068 B1

# FIG. 4

Tf

Te

Tr

| E | E | | | R | R | R |

Dmin

Dmax

t3  t4

EP 0 536 068 B1

FIG. 5

EP 0 536 068 B1